(19) Europäisches Patentamt
European Patent Office
Office européen des brevets

(11) **EP 2 962 089 B1**

(12) **EUROPÄISCHE PATENTSCHRIFT**

(45) Veröffentlichungstag und Bekanntmachung des Hinweises auf die Patenterteilung:
**28.12.2016 Patentblatt 2016/52**

(21) Anmeldenummer: **14710790.8**

(22) Anmeldetag: **17.01.2014**

(51) Int Cl.:
*G01N 23/083* *(2006.01)*    *H01M 4/86* *(2006.01)*
*H01M 8/02* *(2006.01)*

(86) Internationale Anmeldenummer:
**PCT/DE2014/000021**

(87) Internationale Veröffentlichungsnummer:
**WO 2014/135135 (12.09.2014 Gazette 2014/37)**

(54) **VERFAHREN ZUR CHARAKTERISIERUNG DER KATALYSATORSTRUKTUR IN EINER BRENNSTOFFZELLE, SOWIE DAZU GEEIGNETES BRENNSTOFFZELLENDESIGN**

METHOD FOR CHARACTERISING THE CATALYST STRUCTURE IN A FUEL CELL, AND FUEL CELL DESIGN SUITABLE FOR SAID METHOD

PROCÉDÉ DE CARACTÉRISATION DE LA STRUCTURE DU CATALYSEUR DANS UNE PILE À COMBUSTIBLE ET CONCEPTION DE PILE À COMBUSTIBLE APPROPRIÉE POUR CELA

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2013 DE 102013003543**

(43) Veröffentlichungstag der Anmeldung:
**06.01.2016 Patentblatt 2016/01**

(73) Patentinhaber: **Forschungszentrum Jülich GmbH 52425 Jülich (DE)**

(72) Erfinder: **KULIKOVSKY, Andrei 52385 Nideggen-Abenden (DE)**

(56) Entgegenhaltungen:
**US-A1- 2007 238 001    US-A1- 2011 008 707**

- CHRISTINA ROTH ET AL: "In-situ XAFS fuel cell measurements of a carbon-supported Pt-Ru anode electrocatalyst in hydrogen and direct methanol operation", PHYSICAL CHEMISTRY CHEMICAL PHYSICS, Bd. 4, Nr. 15, 3. Juli 2002 (2002-07-03), Seiten 3555-3557, XP055118054, ISSN: 1463-9076, DOI: 10.1039/b204293b in der Anmeldung erwähnt
- WILSON M S ET AL: "THIN-FILM CATALYST LAYERS FOR POLYMER ELECTROLYTE FUEL CELL ELECTRODES", JOURNAL OF APPLIED ELECTROCHEMISTRY, SPRINGER, DORDRECHT, NL, Bd. 22, Nr. 1, 1992, Seiten 1-07, XP000461070, ISSN: 0021-891X, DOI: 10.1007/BF01093004
- DITTY DIXON ET AL: "Space Resolved, in Operando X-ray Absorption Spectroscopy: Investigations on Both the Anode and Cathode in a Direct Methanol Fuel Cell", JOURNAL OF PHYSICAL CHEMISTRY C, Bd. 116, Nr. 13, 5. April 2012 (2012-04-05), Seiten 7587-7595, XP055118173, ISSN: 1932-7447, DOI: 10.1021/jp211321u

EP 2 962 089 B1

**Beschreibung**

Die Erfindung betrifft ein Verfahren zur Charakterisierung einer Brennstoffzelle, insbesondere einer Membran-Brennstoffzelle, und insbesondere der Katalysatorstruktur einer Kathode einer solchen Brennstoffzelle. Ferner betrifft die Erfindung ein spezielles Brennstoffzellendesign, welches das vorgenannte Charakterisierungsverfahren erst ermöglicht.

Stand der Technik

Viele elektrokatalytische Reaktionen werden durch die Struktur und die Eigenschaft des Katalysators deutlich beeinflusst. Daher werden verstärkt Versuche unternommen, um die strukturellen Eigenschaften von Brennstoffzellen, und dabei insbesondere der katalytischen Schichten der jeweiligen Elektroden, zu untersuchen.

Während die Identifizierung und Charakterisierung von elektro-chemischen Reaktionsprodukten ausschließlich während des Brennstoffzellenbetriebs erfolgt, finden Untersuchungen zur Charakterisierung des Katalysators in der Regel nur vor und teilweise auch nach dem Brennstoffzellenbetrieb statt.

Um zu einem besseren Verständnis für die Zusammenhänge zwischen der Katalysatorstruktur und der resultierenden elektrokatalytischen Aktivität einer Membranbrennstoffzelle (PEMFC) zu gelangen, sind aus der Literatur bereits unterschiedliche Untersuchungsmethoden bekannt. Die zur strukturellen Charakterisierung eingesetzten Methoden umfassen mikroskopische, spektroskopische und Beugungs-Verfahren, wie beispielsweise Röntgenbeugung (XRD), Transmissionselektronenmikroskopie (TEM) und Röntgenabsorptionsspektroskopie (XAS). Ferner lassen sich die Verfahren unterscheiden in Verfahren zur bulk-und/oder zur Oberflächencharakterisierung. Für die Bestimmung der elektrokatalytischen Eigenschaften der untersuchten Materialien werden in der Regel die zyklische Voltametrie (ZV) oder die elektrochemische Impedanzspektroskopie bei Brennstoffzellen eingesetzt.

Von den vorgenannten Methoden gehört die Transmissions-Röntgenabsorptionsspektroskopie (XAS) zum Standardverfahren für die Bestimmung der kurzreichweitigen Ordnung in Molekülen und Festkörpern. Sie ist daher insbesondere dazu geeignet, um Änderungen der Katalysatorstruktur oder des Katalysatoroxidationszustandes während des Betriebs zu verfolgen, da sie detaillierte Strukturinformationen über die nächste Umgebung des untersuchten Atoms liefert.

Bei der Transmissions-XAS wird das Verhältnis der Röntgenintensität vor und nach Durchtritt durch die Probe gemessen und so die Absorption bestimmt. Physikalisch gesehen kommt es bei der Bestrahlung einer Probe mit Röntgenstrahlungen zu einer Wechselwirkung, dass heißt in Anhängigkeit vom Energiegehalt der Strahlung zu einer Ionisation von Atomen oder Molekülen durch Absorption der Strahlung. Die neutralen Teilchen absorbieren dabei ein oder mehrere Photonen aus einem Strahlungsfeld, welches dabei selbst eine Abschwächung erfährt, die anschließend detektiert wird.

Vorteilhaft wird bei diesen Messungen als Quelle eine Röntgenstrahlung mit veränderlicher Energie eingesetzt. Dies erlaubt eine Auswahl aus dem kontinuierlichen Spektrum, so dass eine monochrome Strahlung mit definiertem Energieinhalt verwendet werden kann, die selektiv für die Ionisation von bestimmten Atomen bzw. Molekülen ausreicht.

Die Ionisationsschwelle hängt dabei spezifisch von dem Orbital ab, aus dem das Elektron (Photoelektron) durch die Ionisation entfernt wird. Zusätzlich verändert die Wechselwirkung des Photoelektrons mit benachbarten Atomen den Dämpfungskoeffizient in der Nähe der Ionisationsschwelle der Röntgenstrahlung, wobei diese Änderung direkt von der Energie des ursprünglichen ionisierten Elektrons (Photons) abhängt, und somit atomspezifisch ist.

Die Transmissions-XAS ist ein sehr einfaches Verfahren, setzt jedoch voraus, dass die Probe dünn genug ist, so dass wenigstens eine Teil der Röntgenstrahlung auch noch durchtreten kann. Bei einer niedrigen Intensität der Röntgenstrahlung müssten die Proben dafür extrem dünn sein, beispielsweise im Bereich eines Mikrometers.

Bei der Transmissions-XAS tragen sowohl das Innere der Probe als auch ihre Oberfläche zur Absorption bei. Der Beitrag der Oberfläche ist jedoch in der Regel viel schwächer als der des Volumens, und kann daher in der Regel nicht getrennt bestimmt werden. Für die Bestimmung der Röntgenintensität werden Ionisationszähler eingesetzt.

In Brennstoffzellenelektroden sind in der Regel die Katalysatorteilchen diejenigen Atome, die von Interesse sind, und dabei besonders die Platin-Teilchen. Eine Transmissions-XAS Messung an einer Brennstoffzelle, bei der die Intensität der Strahlung nach Durchgang durch beispielsweise eine Platin-geträgerte Katalysatorschicht gemessen wird, lässt die Energieabhängigkeit des Dämpfungskoeffizienten in der Nähe der Ionisationsschwelle Rückschlüsse über die Oberflächenadsorptionsverbindungen, die Koordinationszahlen und die Nachbarn eines adsorbierten Platinatoms zu.

Der große Vorteil der Transmissions-XAS Methode ist der, dass diese Messungen *in-situ,* das heißt während des Betriebs einer Brennstoffzelle erfolgen können, so dass der Zustand des Katalysators in einer arbeitenden Brennstoffzelle untersucht werden kann. Als Einschränkung muss festgehalten werden, dass die Transmissions-XAS Methode Infomationen bezüglich einer bulk-Eigenschaft liefert, während gerade das in einer Niedertemperatur-Brennstoffzelle eingesetzte katalytische Material in der Regel von Natur aus uneinheitlich ist, und sich über eine Partikelgrößenverteilung und entsprechende Morphologie definiert.

Bei Brennstoffzellen wird in der Regel sowohl ein anodischer als auch ein kathodischer Katalysator eingesetzt.

Ohne weitere Modifikation würde eine direkte Transmissions-XAS Messung senkrecht zur Zellebene einer Brennstoffzelle somit ein überlagertes Signal von beiden Elektroden umfassen. Sofern in beiden Elektroden ein identischer Katalysator, z. B. Platin, verwendet wird, würde das Messergebnis somit kaum aussagekräftig sein.

Eine Überlegung geht daher davon aus, dass im Bereich des Röntgenstahls in einer der beiden Katalysatorschichten der Elektroden ein katalysatorfreier Bereich geschaffen werden sollte, damit das Messsignal dann nur noch die Informationen des Katalysators der anderen Elektrode enthält.

Bei Brennstoffzellen ist insbesondere die Kathode Gegenstand vieler Untersuchungen, da bei den größten Potentialverlusten ihr Ursprung in der Kathode vermutet wird. Es wird vermutet, dass mit Hilfe eines besseren Verständnisses der Zustände der Platinatome der Katalysatorschicht auf der Kathodenseite einer Brennstoffzelle, in Zukunft die dortigen Potentialverluste minimiert werden können.

In der Praxis wird daher bei *in situ* Transmissions-XAS Untersuchungen einer in Betrieb befindlichen Brennstoffzelle ein kleiner kreisförmiger Bereich aus einer der Katalysator aufweisenden Elektroden entfernt, um ausschließlich Informationen zu dem Katalysator der anderen Elektrode zu erhalten. Aus [1,2] ist beispielsweise bekannt, einen ca. 0,2 cm$^2$ großen Bereich aus der Kathode zu entfernen, um so bessere Informationen zum Anodenkatalysator zu erhalten. Dieser besteht beispielsweise aus dem Standard Pt-Ru (1:1) mit 20 Gew.-% auf Vulcan XC-72. Die Beladung wurde mit 1,2 mg/cm$^2$ deutlich höher als üblich gewählt, um ein gutes Signal-Rauschverhältnis zu erzeugen. Da die Absorptionskante des Ru bei einer anderen Energie liegt, werden die Transmissions-XAS Untersuchungen und die Auswertung durch die Anwesenheit des Ru nicht beeinträchtigt.

Es konnte anhand von Modellierungen jedoch gezeigt werden, dass das Entfernen des Katalysators aus dem Anodenfenster auf der Anodenseite zu einer deutlichen Reduzierung des Membranpotentials Φ und zu einer deutlichen Verringerung des lokalen Stroms auf der Kathodenseite in Richtung des Mittelpunktes des Messfensters führt. Darüber hinaus wurde festgestellt, dass die Ausprägung des lokalen Stroms auf der Oberfläche der Kathode auch eine nicht unerhebliche radiale Ungleichverteilung aufweist. Dies würde darauf hinweisen, dass sich die Katalysatorteilchen scheinbar in unterschiedlichen Zuständen befinden, je nachdem wo sie sich auf der Oberfläche innerhalb des bestrahlten Kathodenfensters (Messfensters) befinden.

Daraus lässt sich aber im Weiteren folgern, dass die bisherigen Aussagen, basierend auf den Standard Transmissions-XAS Messungen zur Charakterisierung des Zustandes und der Struktur eines Katalysators, möglicherweise in Frage zu stellen sind, da sie zwar eine summarische Aussage zum Katalysator innerhalb des Kathodenfensters treffen, aber aus vorgenannten Gründen nicht stellvertretend auf die gesamte Katalysatorschicht außerhalb des Spots zu übertragen sind.

Aufgabe und Lösung

Die Aufgabe der Erfindung ist es, ein Verfahren zur Charakterisierung eines Katalysators in einer Membran-Brennstoffzelle *in-situ,* d. h. während des Betriebs einer Brennstoffzelle, bereitzustellen, welches eine realistischere Aussage zum Zustand und der Struktur des Katalysators der gesamten Katalysatorschicht der Brennstoffzelle zulässt, als es bislang entsprechend dem Stand der Technik möglich ist.

Ferner ist es die Aufgabe der Erfindung, ein für dieses Verfahren angepasstes und zumindest teilweise optimiertes Design einer Brennstoffzelle zur Verfügung zu stellen.

Die Aufgaben der Erfindung werden gelöst durch ein Verfahren mit den Kennzeichen gemäß Anspruch 10 sowie durch eine Brennstoffzelle mit den Merkmalen gemäß Anspruch 1. Vorteilhafte Ausführungsformen des Verfahrens und der Brennstoffzelle sind den jeweils darauf rückbezogenen Ansprüchen zu entnehmen.

Gegenstand der Erfindung

Die Transmissions-Röntgenabsorptionsspektroskopie (Transmissions-XAS) ist eine besonders geeignete Methode, um bei einer Brennstoffzelle während des Betriebs Untersuchungen des Katalysators vornehmen zu können. Die XAS-Standard-Untersuchungsmethode für eine Kathode einer Brennstoffzelle sieht dazu vor, einen Teil des anodischen Katalysators, in der Regel Platin oder eine Platin/Rutheniummischung, in einem kleinen Bereich zu entfernen, um so ein transparentes Fenster für die senkrecht auf die Brennstoffzelle treffenden Röntgenstrahlen zu schaffen und ungehinderten Zugang zu dem Katalysator der Kathode zu ermöglichen, d. h. ohne weitere Absorption durch einen Katalysator der Anode. Gegebenenfalls bedeutet das, einen entsprechenden Teil der Anode mitsamt dem Katalysator komplett zu entfernen. Das in der Regel kreisförmige katalysatorfreie Fenster, im Folgenden "Anodenfenster" genannt, hat dabei einen Radius, der mit $R_a^{max}$ bezeichnet wird. Der Index a deutet auf die Anode hin. In der Regel entspricht dieses Anodenfenster vom Durchmesser her gerade dem des bei der XAS-Messung eingesetzten Röntgenstrahls.

Bei der Standard-Messanordnung wird der monochrome Röntgenstrahl nahezu senkrecht auf die Zellebenen der Brennstoffzelle geleitet, so dass auf der Kathodenseite (Index K) ein Bereich (Messfenster) mit identischem Radius

$R_k^{max} = R_a^{max}$ bestrahlt wird. Die in diesem Bereich befindlichen Katalysatorteilchen auf der Kathodenseite bewirken je nach Energiegehalt der Röntgenstrahlung eine Absorption und somit eine Abschwächung des Röntgenstrahls, der anschließend detektiert wird. Der Detektor ist üblicherweise ebenfalls auf den Bereich des Messfensters beschränkt, um sicherzustellen, dass ausschließlich die durch die Absorption innerhalb des Messfensters abgeschwächten Röntgenstrahlen erfasst werden.

Es hat sich im Rahmen der Erfindung auf Grund von Modellierungen herausgestellt, dass diese Standarduntersuchungsmethode durch das Entfernen des Katalysators auf der Anodenseite auf der gegenüberliegenden Kathodenseite im bestrahlten Bereich nachteilig dazu führt, dass die Stromverteilung innerhalb der Brennstoffzelle verändert wird. Tatsächlich konnte gezeigt werden, dass dies zu einer ungleichen Verteilung des Potentials in Abhängigkeit vom Radius des Messfensters führt. Der lokale Strom auf der Kathodenoberfläche im Bereich der Bestrahlung (Messfenster) zeigt eine entsprechende Inhomogenität auf, da die elektrochemischen Prozesse, die an den Elektroden ablaufen, durch das Entfernen des Katalysators aus einem Teil der Anodenoberfläche empfindlich gestört werden.

Das führt dazu, dass die bislang erhaltenen Messergebnisse in Summe zwar charakteristisch für den Katalysator in dem bestrahlten Bereich auf der Kathodenseite sind, jedoch in der Regel nicht den aktuellen Zustand der Katalysatorpartikel auf der gesamten Kathodenseite repräsentieren. Dies ist jedoch gerade die Information, die man sich aus dieser Art Untersuchung (XAS) versprochen hatte.

Basierend auf Modellierungsuntersuchungen wird erfindungsgemäß ein neues Design für eine Brennstoffzelle mit einer ersten und einer zweiten Elektrode vorgeschlagen, die besonders gut für eine *in situ* XAS-Messung eingesetzt werden kann, und die innerhalb des Messbereichs vorteilhaft eine nahezu gleichmäßige Verteilung des lokalen Stroms über die zweite Elektrodenoberfläche aufweist. Damit kann sichergestellt werden, dass über eine solche Messung eine Information über den Katalysator der zweiten Elektrode erhalten wird, die einer Charakterisierung der gesamten Katalysatorpartikel auf bzw. in der zweiten Elektrode deutlich besser als bislang entspricht, und nicht nur auf den vermessenen Bereich des Messfensters zutrifft.

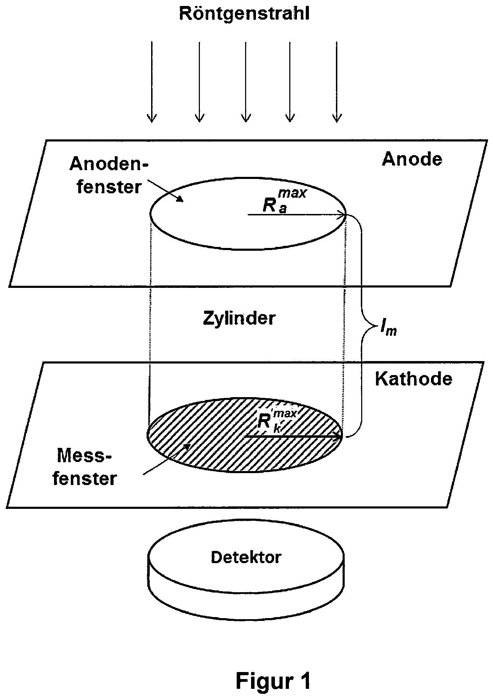

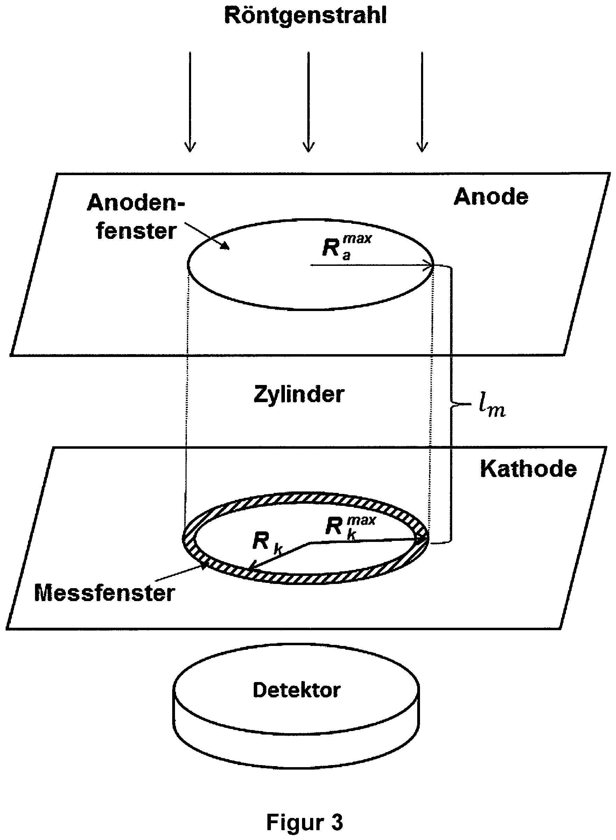

In den Figuren 1 und 3 ist jeweils eine Ausgestaltungsvariante der Untersuchungsanordnung für eine Transmissions-Röntgenabsorptionsmessung dargestellt, bei der in Blickrichtung des Röntgenstrahls die erste Elektrode der Brennstoffzelle eine Anode und die zweite Elektrode der Brennstoffzelle eine Kathode darstellt. Wie in den Figuren angedeutet, trifft der Röntgenstrahl in dieser Ausgestaltung zunächst senkrecht auf die Anode, durchdringt die Elektrolytmembran und die Kathode, bevor er anschließend detektiert wird. Die Geometrie in Figur 1 entspricht dabei dem bekannten Stand der Technik, während in Figur 3 eine vorteilhafte Ausführungsform der Erfindung dargestellt ist.

Auch wenn im Folgenden die Erfindung anhand dieser Ausgestaltungsvariante näher erläutert wird, so ist die Erfindung jedoch ausdrücklich nicht auf diese Ausführung einer Brennstoffzelle beschränkt, sondern umfasst explizit auch den umgekehrten Ausführungsfall einer Brennstoffzelle mit einer Kathode als erste Elektrode und einer Anode als zweite Elektrode. Das Grundprinzip des neuen Brennstoffzellendesigns wird von der konkreten Ausgestaltung der Elektroden nicht beeinflusst und funktioniert in beiden Fällen.

Das der Simulation gemäß dem Stand der Technik zugrunde liegende Modell einer Brennstoffzelle ist in Figur 1 wiedergegeben. Um den Beitrag des auf der Anode befindlichen Katalysators auf die Transmissions-Röntgenabsorptionsmessung auszuschließen, wird der Anodenkatalysator in einem kleinen kreisförmigen Bereich (Anodenfenster) entfernt. Eine typische Größe für ein solches katalysatorfreies Anodenfenster ist beispielsweise ein kreisförmiger Bereich mit einem Radius von ca. 0,2 bis 0,4 cm. Der Radius des Anodenfensters wird vorliegend mit $R_a^{max}$ bezeichnet, wobei der Index a die Anodenseite kennzeichnet. Die Fläche des Anodenfensters liegt somit typischerweise im Bereich von 10 bis 50 mm$^2$.

Der katalysatorfreie Bereich auf der Anode ist erfindungsgemäß derart gewählt, dass er von dem fokussierten Strahldurchmesser des Röntgenstrahls vollständig bestrahlt wird. Sofern der Strahldurchmesser des Röntgenstrahls größer als der des kreisförmigen katalysatorfreien Bereichs auf der Anode ist, kann gegebenenfalls auch eine entsprechende Blende zwischen Röntgenquelle und erster Elektrode vorgesehen werden, wobei die Öffnung der Blende identisch ist mit dem katalysatorfreien Bereich der Anode, d. h ebenfalls einen Radius $R_a^{max}$ aufweist.

Aus Gründen der Vereinfachung wird ein analoger kreisförmiger Bereich auf der Kathodenseite mit identischem Radius $r = R_a^{max} = R_k^{max}$ gegenüber dem Anodenfenster als "Messfenster" bezeichnet, wobei der Index k die Kathodenseite kennzeichnet. Dieser Bereich ist identisch mit dem vom Röntgenstrahl bestrahlten Bereich auf der Kathodenoberfläche und in Fig. 1 schraffiert dargestellt.

Der zylindrische Bereich des zwischen dem Anodenfenster auf der Anodenseite und dem Messfenster auf der Kathodenseite angeordneten Elektrolyten (Polymer-Elektrolytmembran) wird vorliegend als "Zylinder" bezeichnet. Die Zylinderhöhe entspricht dabei der Schichtdicke $l_m$ der Elektolytmembran, die zwischen der Anode und der Kathode angeordnet ist. Zur Vereinfachung sind die Anode und die Kathode jeweils nur als 2-dimensionale Flächen dargestellt.

Die Schichtdicken der einzelnen Katalysatorschichten werden in diesem Zusammenhang für die Auswertung vernachlässigt, da die Protonenleitfähigkeit der Katalysatorschichten um ein Vielfaches geringer ausfällt, als die der Membran. Insbesondere die Protonenleitfähigkeit parallel zur Zellebene ist für die Katalysatorschicht sehr viel kleiner als die für die Elektrolytmembran.

Als neues Design für die Durchführung von Transmissions-XAS-Messungen wird erfindungsgemäß eine Brennstoffzelle gemäß Figur 3 vorgeschlagen. Die Bezeichnungen sind dabei identisch aus Figur 1 übernommen. Der monochromatische Röntgenstrahl wird auf den Bereich $r = R_a^{\max}$ fokussiert und entspricht somit dem Anodenfenster.

Erfindungsgemäß wird neben der Entfernung von Katalysator aus dem kreisförmigen Bereich mit $R_a^{\max}$ (Anodenfenster) aus der Anode (erste Elektrode) nunmehr auch auf der gegenüberliegenden Kathode (zweite Elektrode) ein Teil des Katalysators aus dem Messfenster entfernt. Die Katalysatorentfernung erfolgt dabei vorteilhaft von innen ebenfalls in einem kreisförmigen Bereich, wobei der Mittelpunkt des Messfensters als Mittelpunkt des katalysatorfreien Bereichs gewählt wird, und wobei ein Radius $R_k < R^{\max}$ gewählt wird.

Die Entfernung des Kathodenkatalysators erfolgt derart, dass innerhalb des kreisförmigen Bereichs (Messfensters) somit ein schmaler Ring mit der Breite $R_k^{\max} - R_k$ mit Katalysator bestehen bleibt (Probenring), welcher in der Fig. 3 ebenfalls schraffiert dargestellt ist.

Es hat sich auf Grund der Modellierung herausgestellt, dass durch die Wahl einer Ringgeometrie anstelle eines kreisförmigen Bereichs auf der Kathodenseite, der durch die Sauerstoff-Reduktionsreaktion bedingte Strom innerhalb des Probenringes nahezu konstant und unabhängig von Radius verläuft, sofern der Ringbreite schmal gewählt wird, und insbesondere der Membranschichtdicke $l_m$ entspricht. Erfindungsgemäß wird daher die Ringbreite $R_k^{\max} - R_k$ sehr viel kleiner als $R_k^{\max}$ gewählt, und im optimalen Fall an die Schichtdicke der Membran $l_m$, die die Anode und die Kathode voneinander trennt, angepasst.

In Absolutwerten sollte die Membran eine maximale Schichtdicke $l_m$ zwischen 50 und 200 $\mu$m aufweisen. Somit werden als vorteilhafte Ringbreite ebenfalls Werte zwischen 50 und 200 $\mu$m vorgeschlagen. Bei den bisherigen Radien für die Anodenfenster im Bereich von 0,2 bis 0,4 cm ist daher die Annahme, dass $(R_k^{\max} - R_k) << R_k^{\max}$, gut erfüllt.

Während der XAS-Messung durchdringt der Röntgenstrahl die Brennstoffzelle in einem Bereich mit $r = R_a^{\max} = R_k^{\max}$. Der innere Bereich des Messfensters mit $r < R_k$ weist weder auf der Anodenseite noch auf der Kathodenseite Katalysator auf, und leistet somit keinen Beitrag zur Absorption des Röntgenstrahls. Nur der Katalysator innerhalb des Probenrings mit $R_k < r \leq R_k^{\max}$ auf der Kathodenseite, der von der Röntgenstrahlung getroffen wird, trägt zur Absorption und somit zur Schwächung des Signals bei.

Der äußere Durchmesser des Katalysator aufweisenden Probenringes, der von den Röntgenstrahlen getroffen wird, entspricht dabei dem des Messfensters auf der Kathodenseite, bzw. dem des katalysatorfreien Bereichs (Anodenfenster) auf der Anodenseite. Die Ringbreite $R_k^{\max} - R_k$ des Probenrings in radialer Richtung entspricht bevorzugt der Schichtdicke der Membran $l_m$, oder wird geringer als diese gewählt.

Das bedeutet, dass bei einer Membranschichtdicke von beispielsweise $l_m$ = 100 $\mu$m, die Ringbreite $R_k^{\max} - R_k$ im Idealfall weniger als ca. 100 $\mu$m aufweisen sollte. Abweichungen der Probenringbreite (Membranschichtdicke $\pm$ 50 %) sind im Rahmen der Erfindung aber auch mit umfasst. Aus Gründen der Übersichtlichkeit sind in der Figur 3 die Größen der Probenringbreite und der Membranschichtdicke verzerrt dargestellt, und entsprechen ausdrücklich nicht den realen Verhältnissen.

Die Festlegung der Ringbreite $R_k^{\max} - R_k$ sollte dabei zwei Kriterien erfüllen. Einerseits muss sichergestellt werden, dass der Probenring schmal genug ist, damit die vorgenannten Inhomogenitäten, wie sie beim Stand der Technik auftreten, möglichst gering gehalten werden. Zum anderen muss der Katalysator aufweisende Probenring aber auch breit genug sein, damit das dadurch abgeschwächte Signal des Röntgenstrahls noch qualitativ aussagekräftig ist.

Bei den bisherigen Standardmessungen weist der komplette Bereich innerhalb des Probenfensters mit $r = R_k^{\max}$ Katalysator auf und trägt somit zur Röntgenstrahlungsabsorption bei. Die Fläche mit Katalysator entspricht dabei $F = \pi (R_k^{\max})^2$.

Demgegenüber würde bei der erfindungsgemäßen Messung bei identischem äußeren Radius des Messfensters mit $r = R_k^{\max}$ nunmehr deutlich weniger Katalysator für die Absorption des Röntgenstrahls zur Verfügung stehen. Die Fläche des Probenrings mit Katalysator ergibt sich dabei zu: $F = \pi \left[ (R_k^{max})^2 - R_k^2 \right]$ und ist damit um ein Vielfaches geringer, als die Fläche des Messfensters mit Katalysator, die nach dem Stand der Technik zur Abschwächung des Röntgenstrahls beiträgt.

Es hat sich durch die Simulation herausgestellt, dass die Eigenschaften an der Grenze $R = R_k$ unabhängig vom absoluten Wert des Radius sind. Um daher zu einem aussagekräftigen Messergebnis zu gelangen, wird vorgeschlagen, den äußeren Radius $R_k^{max}$ des Anoden, bzw. Messfensters gegenüber dem aus dem Stand der Technik üblichen Radius entsprechend zu vergrößern, um so - trotz der Bedingung $R_k^{max} - R_k \sim l_m$ - zu einer größeren Ringfläche auf der Kathodenseite zu gelangen. Die maximal einzustellende Größe wird dabei von dem Röntgenstrahl limitiert.

Alternativ oder kumulativ dazu kann aber auch über eine erhöhte Katalysatorbelegung nachgedacht werden. So ist aus der Literatur bereits bekannt, dass für XAS-Untersuchungen an Brennstoffzellen die Katalysatorbelegung mit Platin beispielsweise auf wenigstens 1,2 mg/cm$^2$ je Elektrode erhöht wurde, was ca. dem 6-fachen der üblichen Beladung entspricht. Dies sollte einen vertretbaren Kompromiss darstellen zwischen einem guten Signal-Rausch-Verhältnis des detektierten Röntgenstrahls und fast unveränderten Elektrodeneigenschaften, bezogen auf die Stromdichteverteilung und die dort stattfindenden Transportprozesse. Auch bei der vorliegenden Erfindung kann daher die Katalysatorbelegung entsprechend erhöht werden, um zu einem verbesserten Signal-Rausch-Verhältnis zu gelangen.

Eine Simulation dieser neuen erfindungsgemäßen Ringgeometrie auf der Kathodenseite hat bestätigt, dass unter den gegebenen Voraussetzungen $R_k^{max} - R_k \ll R_k^{max}$ und gleichzeitig $R_k^{max} - R_k \sim l_m$ die lokale Stromdichteverteilung über die Ringoberfläche nahezu gleichmäßig und homogen verläuft. Dies weist darauf hin, dass sich die Katalysatorteilchen innerhalb des Probenringes (d. h. die über die Messung erfassten Katalysatoratome) und auch die außerhalb des Messbereichs nunmehr in nahezu identischen Zuständen befinden.

Die Aussagen, die über eine solche Transmissions-Röntgenabsorptionsmessung zu den Katalysatorteilchen gemacht werden können, repräsentieren nunmehr vorteilhaft den Zustand der gesamten Katalysatorschicht auf, bzw. in der zweiten Elektrode, das heißt auch für den Bereich mit $r > R_k^{max}$, das bedeutet den Bereich der Katalysatorschicht, der außerhalb des eigentlichen Messfensters liegt.

Die Transmissions-XAS-Messung selbst wird dabei analog zu den aus dem Stand der Technik bekannten Messungen durchgeführt. Eine erfindungsgemäße Variation kann aber beispielsweise in einem adaptierten größeren Strahldurchmesser für den verwendeten Röntgenstrahl, bzw. in einer größeren Blende liegen. Zudem wird dabei eine Brennstoffzelle mit dem neuen erfinderischen Ring-Design eingesetzt.

Vorteilhaft wird entweder der Röntgenstrahldurchmesser derart an das Anodenfenster angepasst, dass der Strahldurchmesser genau dem des Anodenfensters entspricht. Dadurch wird einerseits sichergestellt, dass der Bereich des Anodenfensters und damit auch des Messfensters, bzw des Probenringes vollständig vom Röntgenstrahl durchstrahlt wird und so eine entsprechende qualitative Aussage zum Katalysator möglich wird. Andererseits kann so verhindert werden, dass Röntgenstrahlen, die außerhalb des Messfensters auftreffen, und die somit Informationen zum Katalysator der ersten und der zweiten Elektrode beinhalten würden, ebenfalls mit in das Ergebnis eingehen und dieses entsprechend verfälschen.

Alternativ zur Anpassung der Geometrie des Röntgenstrahls oder auch kumulativ dazu könnte auch der Detektor entsprechend angepasst werden. Hier könnte beispielsweise eine zusätzliche Blende zwischen der Brennstoffzelle und dem Detektor den Bereich außerhalb des Messfensters abschirmen.

Zusammenfassend lässt sich sagen, dass die vorliegende Erfindung ein Verfahren zur Charakterisierung der Katalysatorstruktur in einer Brennstoffzelle betrifft, und dabei insbesondere die Transmissions-Röntgenabsorptionsmessungen (XAS), bei denen ein neues Brennstoffzellendesign eingesetzt wird. Die eingesetzte Brennstoffzelle umfasst eine erste (planare) Elektrode mit einem ersten Katalysator, eine zweite (planare) Elektrode mit einem zweiten Katalysator, sowie eine zwischen den Elektroden angeordnete Elektroltymembran mit einer Schichtdicke $l_m$, *wobei* die erste Elektrode wenigstens einen katalysatorfreien kreisförmigen Bereich mit einem Radius $R_1^{max}$ aufweist. Anders als bislang üblich weist die zweite Elektrode der erfindungsgemäßen Bennstoffzelle ebenfalls einen katalysatorfreien kreisförmigen Bereich mit einem Radius $R_2 < R_1^{max}$ auf. Vorteilhaft gilt 0,5 $l_m \leq [ R_1^{max} - R_2 ] \leq 2\, l_m$. Der zwischen $R_1^{max}$ und $R_2$ gelegene Bereich beschreibt den so genannten Probenring, der Katalysator aufweist und während der Messung vom Röntgenstrahl entsprechend durchstrahlt wird.

Simulationen belegen, dass sich bei diesen Untersuchungen, die nur einen schmalen katalysatorhaltigen Probenring erfassen, die lokale Stromdichte über die Oberfläche nahezu konstant gehalten werden kann, und daher die hierbei erfassten Katalysatorteilchen deutlich repräsentativer für die gesamte Katalysatorschicht sind, als bei den bislang erfolgten Untersuchungen mit Brennstoffzellen, die eine komplett kreisförmige Messgeometrie als Probe verwenden.

Spezieller Beschreibungsteil

An dieser Stelle soll näher auf die der Erfindung zu Grunde liegende Simulation und die Modellrechnungen eingegangen werden, die zu dem vorgeschlagenen neuen Brennstoffzellendesign geführt haben. Es zeigen:

Figur 1:    Geometrie einer planaren Brennstoffzelle, wie sie nach dem Stand der Technik für einen Transmissions XAS-Messung eingesetzt wird.
Figur 2:    Modellrechnungen für eine Brennstoffzelle mit einer Geometrie gemäß Figur 1.
Figur 3:    Geometrie einer planaren Brennstoffzelle gemäß einem Ausführungsbeispiel der Erfindung, wie sie für eine erfindungsgemäße Transmissions XAS-Messung eingesetzt wird.
Figur 4:    Modellrechnungen für eine Brennstoffzelle mit einer Geometrie gemäß Figur 3.
Figur 5:    vergrößerter Ausschnitt aus der Figur 4b.

Die durchgeführten Simulationen basieren auf einem planaren Brennstoffzellenmodell, welches zwei Katalysator aufweisende Elektroden sowie eine dazwischen angeordnete Membran mit der Schichtdicke $l_m$ als Elektrolyt aufweist, wie es bereits in [3] beschrieben wird. Die dort offenbarten Rahmenbedingungen und Annahmen wurden auch der hier vorgestellten Simulation zu Grunde gelegt. Die in den Figuren 1 und 3 sehr schematisch dargestellten Brennstoffzellen umfassen dabei eine Katalysator aufweisende Anode (oben) und eine ebenfalls Katalysator aufweisende Kathode (unten). Beide Elektroden sind vereinfacht als Flächen dargestellt. Es wird ein zylindrisches Koordinatensystem verwendet, bei dem die z-Achse senkrecht auf den durch die Elektroden gebildeten Brennstoffzellenebenen steht, und r = 0 den Mittelpunkt des Röntgenstrahls beschreibt, der in Richtung der z-Achse senkrecht auf die Brennstoffzellenebenen trifft. r = 0 ist somit auch gleichzeitig Mittelpunkt des kreisförmigen Anodenfensters und legt insofern auch den Mittelpunkt des kreisförmigen Messfensters auf der Kathodenseite fest.

Berechnet und eingetragen wurden jeweils das Membranpotential $\Phi$, das Überpotential der Sauerstoff-Reduktions-Reaktion $\eta_{ox}$, die Stromdichten der Wasserstoff-Oxidations-Reduktions-Reaktion $j_a$ und die Stromdichten der Sauerstoff-Reduktions-Reaktion $j_c$.

Die nachfolgende Tabelle 1 gibt dabei die Parameter wieder, die der vorgestellten Simulation zugrunde gelegt wurden, mit ORR = oxygen reduction reaction = Sauerstoff-Reduktionsreaktion, HOR = hydrogen oxidation reaction = Wasserstoff-Oxidationsreaktion, ACL = anodic catalyst layer = anodische Katalysatorschicht und CCL = cathodic catalyst layer = kathodische Katalysatorschicht.

| | |
|---|---|
| ORR Durchtrittsfaktor, $\alpha_{ox}$ | 0,8 |
| ORR Austauschstromdichte $j_{ox}$ in [A cm$^{-2}$] | 10$^{-6}$ |
| HOR Durchtrittsfaktor, $\alpha_{hy}$ | 1,0 |
| HOR Austauschstromdichte in dem regulären Bereich $j_{hy}^{¥}$ in [A cm$^{-3}$] | 1 |
| ORR Gleichgewichtspotential $E_{ox}^{eq}$ in [V] | 1,23 |
| HRR Gleichgewichtspotential $E_{hy}^{eq}$ in [V] | 0,0 |
| Protonenleitfähigkeit der Membran $\sigma_m$ in [$\Omega^{-1}$ cm$^{-1}$] | 0,1 |
| Membran-Schichtdicke $l_m$ in [cm] | 0,0025 (25 $\mu$m) |
| Strahlradius $R_a^{max}$ in [cm] | 10 * $l_m$ = 0,025 |
| Schichtdicke der Austauschstrom-Übergangsregion s in [cm] | $10^{-3} R_a^{max} = 2,5 \cdot 10^{-5}$ |
| HOR Austausch-Stromdichte (innerhalb des Fensters) / HOR Austausch-Stromdichte (außerhalb des Fensters) $k_s$ | 10$^{-9}$ |
| Zell-Potential $j_c$ in [V] | 0,74513 |
| Zell-Stromdichte in dem regulären Bereich $J$, in [A cm$^{-2}$] | 0,5 |
| Zell-Temperatur $T$ in [K] | 273 + 65 |

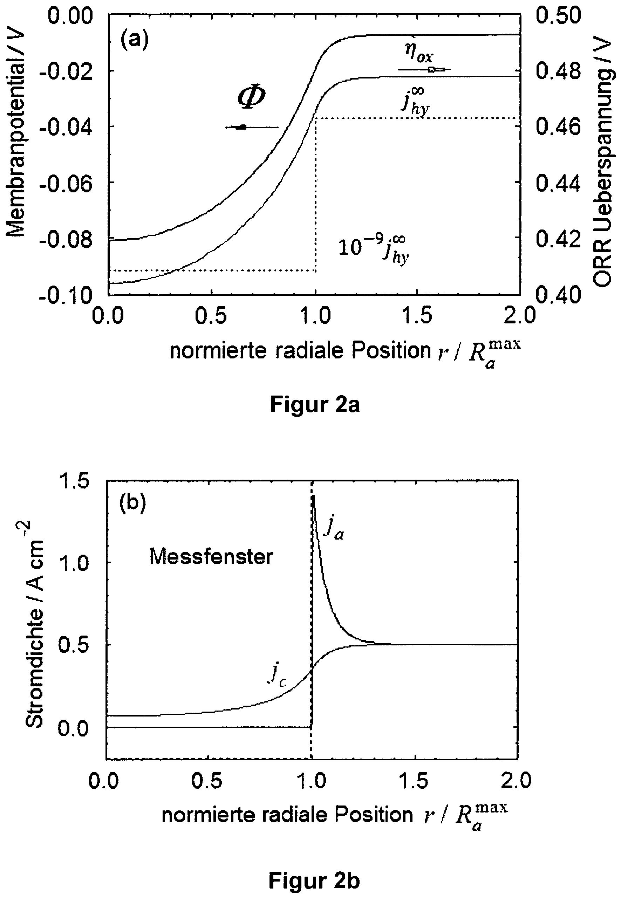

Mit Hilfe der vorgenannten Parameter wurden Berechnungen zum Potential und den Stromdichten innerhalb des Probenfensters auf der Kathodenseite und in unmittelbarer Umgebung dazu vorgenommen. Die Ergebnisse sind in den Figuren 2, 4 und 5 dargestellt.

Zur Vereinfachung und zur Abstraktion wurden dabei die radial abhängigen Werte nicht einer absoluten radialen Position zugeordnet, sondern auf normierte Werte bezogen, wobei sich diese als Verhältnis von absoluter radialer Position r zu $R_a^{max}$ ergeben. Mit r = 0 und somit $r / R_a^{max} = 0$ wird der Mittelpunkt des Probenfensters angegeben. Der Bereich innerhalb des Probenfensters wird durch $0 \leq r / R_a^{max} \leq 1$ dargestellt, wobei $r / R_a^{max} = 1$ gerade den äußeren Ring darstellt, an dem auf der Anodenseite der katalysatorfrei und der katalysatorhaltige Bereich aneinander grenzen. Werte mit $r / R_a^{max} > 1$ kennzeichnen Positionen außerhalb des Probenfensters.

In den Figuren sind die Berechnungen jeweils für einen Bereich vom Mittelpunkt bis zum zweifachen des Radius des Probenfensters/Messfensters dargestellt.

Eine Beispielrechnung ist der nachfolgenden Tabelle 1 zu entnehmen, bei der die Membranschichtdicke beispielsweise auf 25 $\mu$m festgelegt wurde. Die erste Zeile gibt den Referenzwert gemäß dem Stand der Technik bei einem kreisförmigen Messfenster an.

| $R_a^{max} = R_k^{max}$ [mm] | Fläche Anodenfenster [mm²] | $R_k^{max} - R_k$ [mm] | Fläche Messfenster, [mm²] | Messfenster / Anodenfenster |
|---|---|---|---|---|
| 0,25 | 0,20 | 0 | 0,20 | 100 % |
| $R_a^{max} = R_k^{max}$ [mm] | | $R_k^{max} - R_k$ [mm] | Fläche Probenring, [mm²] | Probenring / Standardprobenfenster |
| 0,25 | 0,20 | 0,025 | 0,04 | 20 % |
| 1,26 | | 0,025 | 0,2 | 100 % |
| 0,65 | | 0,050 | 0,2 | 100 % |

In den Figuren 2 und 4 und 5 sind diese simulierten Werte jeweils gegen den auf den maximalen Radius des Anodenfensters normierten radialen Abstand $r / R_a^{max}$ aufgetragen. Der Mittelpunkt des Messfensters r = 0 entspricht dabei x = 0. Die Radien des Anodenfensters $R_a^{max}$, bzw. des Messfensters $R_k^{max}$, entsprechen somit x = 1. Die x-Werte > 1 stehen entsprechend für den Bereich außerhalb des Messfensters.

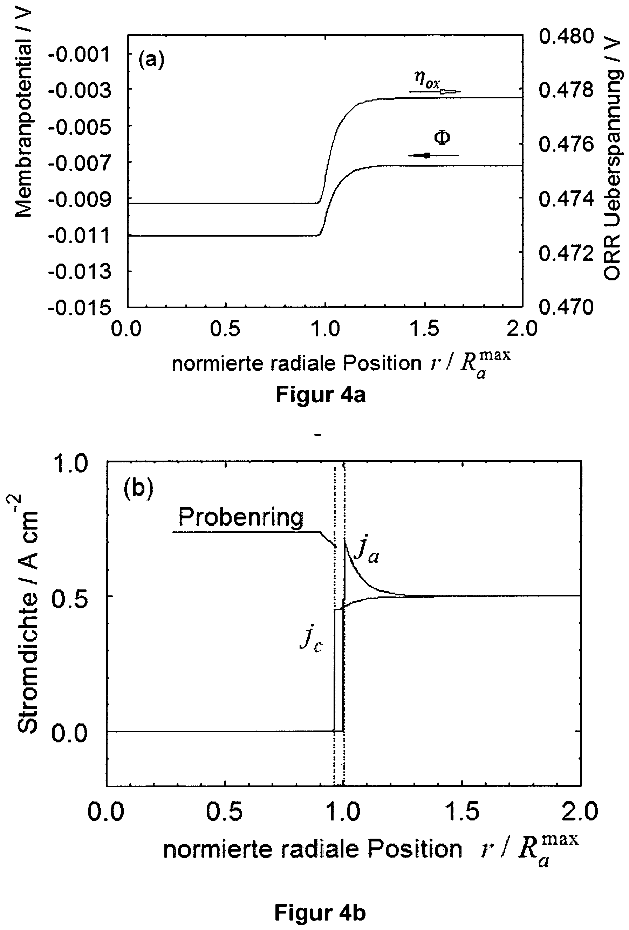

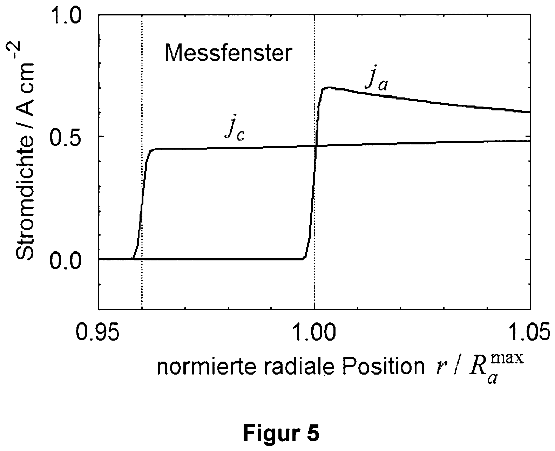

In Figur 2 sind die simulierten Ergebnisse für den Standardfall wiedergegeben, so wie sie sich aus der in Figur 1 dargestellten Geometrie ergeben, während die Figuren 4 und 5 die Ergebnisse für eine erfindungsgemäße vorteilhafte Ausgestaltung der Brennstoffzelle darstellen, wie sie sich aus der in der Figur 3 vorgeschlagenen Geometrie des Probenringes ergeben.

Das Fehlen des Katalysators in dem Anodenfenster spiegelt sich in einem drastischen Rückgang der Stromaustauschdichte für die Wasserstoff-Oxidations-Reaktion wieder, wie in der Figur 2a dargestellt. Das Potential außerhalb des Messfensters liegt bei knapp 0,5 V (0,493 V). Zum Rande des Messfensters hin erkennt man eine kontinuierliche Abnahme des Potentials, welches dann im Inneren des Messfensters bis auf ca. 0,42 V abfällt. Das entspricht einer Abnahme von außerhalb des Messfensters bis hin zum Mittelpunkt des Messfensters von ca. 0,08 V.

Die dementsprechenden Stromdichten finden sich in der Figur 2b wieder. Beide Austauschstromdichten (Stromdichte der Wasserstoff-Oxidations-Reduktions-Reaktion $j_a$, Stromdichte der Sauerstoff-Reduktions-Reaktion $j_c$) liegen außerhalb des Messfensters bei ca. 0,5 A/cm². Zum Rande des Messfensters hin steigt die Stromdichte der Wasserstoff-Oxidations-Reduktions-Reaktion $j_a$ bis auf ca. 1,4 A/cm² steil an, um dann innerhalb des Messfensters konstant bei 0 A/cm² zu liegen. Die Stromdichte der Sauerstoff-Reduktions-Reaktion $j_c$ nimmt demgegenüber zum Rand des Messfensters hin kontinuierlich ab, um dann im Mittelpunkt bei ca. 0,1 A/cm² zu liegen.

Der Einsatz einer erfindungsgemäßen Brennstoffzelle mit einem ringförmigen Messbereich führt demgegenüber zu den in den Figuren 4a, 4b und 5 dargestellten Werten.

Auch hier führt das Fehlen des Katalysators in dem Anodenfenster zu einem Rückgang der Stromaustauschdichte für die Wasserstoff-Oxidations-Reaktion, wie in der Figur 4a dargestellt. Allerdings fällt der Abfall des Potentials hier deutlich geringer aus.

Das Potential außerhalb des Messfensters liegt hier etwas niedriger als üblich, bei ca. 0,475 V. Zum Rande des Messfensters hin erkennt man erneut eine leichte kontinuierliche Abnahme des Potentials bis auf ca. 0,474 V. Dieser Wert bleibt aber im Unterschied zur Standardgeometrie nahezu konstant über die gesamte Messfläche erhalten. Das entspricht einer Abnahme von außerhalb des Messfensters bis hin zum Mittelpunkt des Messfensters von nur noch ca.

0,01 V.

Die dementsprechenden Stromdichten zu der erfindungsgemäßen Brennstoffzelle finden sich in der Figur 4b wieder. Beide Austauschstromdichten (Stromdichte der Wasserstoff-Oxidations-Reduktions-Reaktion $j_a$, Stromdichte der Sauerstoff-Reduktions-Reaktion $j_c$) liegen außerhalb des Messfensters bei ca. 0,5 A/cm$^2$. Zum Rande des Messfensters hin steigt die Stromdichte der Wasserstoff-Oxidations-Reduktions-Reaktion $j_a$ nur noch bis ca. 0,7 A/cm$^2$ an, um dann innerhalb des Messfensters konstant bei 0 A/cm$^2$ zu liegen. Die Stromdichte der Sauerstoff-Reduktions-Reaktion $j_c$ nimmt demgegenüber zum Rand des Messfensters hin kontinuierlich ab. Im Bereich der Ringfläche stellt sich ein nahezu konstanter Wert von ca. 0,45 A/cm$^2$ ein, der dann erst im Bereich von r = $R_k$ in Richtung Mittelpunkt steil auf 0 A/cm$^2$ abfällt.

In der Anmeldung zitierte Literatur:

[1] Christina Roth, Nathalie Martz, Thorsten Buhrmester, Joachim Scherer and Hartmut Fuess; Phys. Chem. Chem. Phys., 2002, 4, 3555-3557.

[2] C. Roth, N. Benker, M. Mazurek, F. Scheiba, H. Fuess; Advanced Engineering Materials (2005) Vol. 7, No. 10, 952 - 956.

[3] A. A. Kulikovsky. J. Electrochem. Soc., 160 (4), 2013, F401 - F405.

**Patentansprüche**

1. Brennstoffzelle zur Durchführung von Transmissions-Röntgenabsorptionsmessungen (XAS), umfassend eine erste (planare) Elektrode mit einem ersten Katalysator, eine zweite (planare) Elektrode mit einem zweiten Katalysator, sowie eine zwischen den Elektroden angeordneten Elektrolytmembran mit einer Schichtdicke $l_m$,
   **dadurch gekennzeichnet, dass**
   - die erste Elektrode wenigstens einen katalysatorfreien kreisförmigen Bereich mit einem Radius $R_1^{max}$ aufweist, und
   - die zweite Elektrode wenigstens einen katalysatorfreien kreisförmigen Bereich mit einem Radius $R_2 < R_1^{max}$ aufweist,

   wobei $R_2 \geq R_1^{max} - 2\, l_m$ und $R_2 > 0$.

2. Brennstoffzelle nach Anspruch 1, wobei der Mittelpunkt des katalysatorfreien Bereichs der ersten Elektrode und der Mittelpunkt des katalysatorfreien Bereichs der zweiten Elektrode auf einer Achse liegen, die während der Messung identisch ist mit der Strahlachse des Röntgenstrahls.

3. Brennstoffzelle nach einem der Ansprüche 1 bis 2, bei der der katalysatorfreie Bereich der ersten Elektrode einen Radius von $R_1^{max}$ zwischen 0,1 und 10,0 mm aufweist, insbesondere zwischen 0,5 und 2,0 mm.

4. Brennstoffzelle nach einem der Ansprüche 1 bis 3, bei der die Schichtdicke $l_m$ der Membran nicht mehr als 200 $\mu$m aufweist, insbesondere nicht mehr als 100 $\mu$m und vorteilhaft zwischen 1 und 50 $\mu$m liegt.

5. Brennstoffzelle nach einem der Ansprüche 1 bis 4, bei der der katalysatorfreie Bereich der zweiten Elektrode einen maximalen Radius $R_2$ von $R_1^{max} - 0{,}5\, l_m$ aufweist.

6. Brennstoffzelle nach einem der Ansprüche 1 bis 5, mit einer Polymer-ElektrolytMembran.

7. Brennstoffzelle nach einem der Ansprüche 1 bis 6, mit einer Katalysatorbeladung der zweiten Elektrode von mehr als 0,5 mg/cm$^2$, insbesondere mit einer Beladung von mehr als 1,0 mg/cm$^2$ und vorteilhaft mit einer Beladung zwischen 1,5 und 2,5 mg/cm$^2$.

8. Brennstoffzelle nach einem der Ansprüche 1 bis 7, bei der die zweite Elektrode eine Kathode ist.

9. Brennstoffzelle nach einem der Ansprüche 1 bis 8, bei der der Katalysator der zweiten Elektrode Platin umfasst.

10. Verfahren zur Durchführung von Transmissions-Röntgenabsorptionsmessungen (XAS), **dadurch gekennzeichnet,**

- **dass** eine Brennstoffzelle gemäß einem der Ansprüche 1 bis 9 eingesetzt wird, und

- **dass** der eingesetzte Röntgenstrahl einen Strahlradius aufweist, der identisch ist mit dem Radius $R_1^{max}$ des katalysatorfreien kreisförmigen Bereichs der ersten Elektrode.

**11.** Verfahren nach Anspruch 10, **dadurch gekennzeichnet,**

- **dass** ein Detektor eingesetzt wird, der ausschließlich einen kreisförmigen Bereich mit einem Radius detektiert, der identisch ist mit dem Radius $R_1^{max}$ des katalysatorfreien kreisförmigen Bereichs der ersten Elektrode.

**12.** Verfahren nach einem der Ansprüche 10 bis 11, **dadurch gekennzeichnet, dass** der Röntgenstrahl durch den katalysatorfreien Bereich der ersten Elektrode auf einen teilweise katalysatorfreien Bereich der zweiten Elektrode fällt und anschließend über einen Detektor das abgeschwächte Signal detektiert wird.

**Claims**

**1.** Fuel cell for carrying out transmission X-ray absorption measurements (XAS), comprising a first (planar) electrode with a first catalyst and a second (planar) electrode with a second catalyst as well as an electrolyte membrane with a layer thickness $l_m$ arranged between the electrodes,
**characterised in that**

- the first electrode has at least one catalyst-free, circular area with a radius $R_1^{max}$ and
- the second electrode has at least one catalyst-free, circular area with a radius $R_2 < R_1^{max}$,

in which $R_2 \geq R_1^{max} - l_m$ and $R_2 > 0$.

**2.** Fuel cell according to claim 1, in which the centre of the catalyst-free area of the first electrode and the centre of the catalyst-free area of the second electrode lie on an axis that is identical to the beam axis of the X-ray beam during measurement.

**3.** Fuel cell according to one of claims 1 to 2, in which the catalyst-free area of the first electrode has a radius of $R_1^{max}$ between 0.1 and 10.0 mm, particularly between 0.5 and 2.0 mm.

**4.** Fuel cell according to one of claims 1 to 3, in which the layer thickness $l_m$ of the membrane is not more than 200 $\mu$m, particularly not more than 100 $\mu$m and advantageously between 1 and 50 $\mu$m.

**5.** Fuel cell according to one of claims 1 to 4,
in which the catalyst-free area of the second electrode has a maximum radius $R_2$ of $R_1^{max} - 0.5\, l_m$.

**6.** Fuel cell according to one of claims 1 to 5 with a polymer electrolyte membrane.

**7.** Fuel cell according to one of claims 1 to 6 with a catalyst load of the second electrode of more than 0.5 mg/cm$^2$, particularly with a load of more than 1.0 mg/cm$^2$ and advantageously with a load between 1.5 and 2.5 mg/cm$^2$.

**8.** Fuel cell according to one of claims 1 to 7, in which the second electrode is a cathode.

**9.** Fuel cell according to one of claims 1 to 8, in which the catalyst of the second electrode is platinum.

**10.** Method for carrying out transmission X-ray absorption measurements (XAS), **characterised in that**

- a fuel cell according to one of claims 1 to 9 is used and
- the X-ray beam used has a beam radius that is identical to the radius $R_1^{max}$ of the catalyst-free, circular area of the first electrode.

**11.** Method according to claim 10, **characterised in that**

- - a detector is used, which detects exclusively a circular area with a radius that is identical to the radius $R_1{}^{max}$ of the catalyst-free, circular area of the first electrode.

12. Method according to one of claims 10 to 11, **characterised in that** the X-ray beam falls through the catalyst-free area of the first electrode onto a partly catalyst-free area of the second electrode and then the attenuated signal is detected through a detector.

**Revendications**

1. Pile à combustible servant à effectuer des mesures de l'absorption de rayons X par transmission (XAS), comprenant une première électrode (planaire) avec un premier catalyseur, une deuxième électrode (planaire) avec un deuxième catalyseur, ainsi qu'une membrane électrolytique, disposée entre les électrodes, avec une épaisseur de couche $l_m$, **caractérisée en ce que**

    - la première électrode présente au moins une zone de forme circulaire sans catalyseur avec un rayon $R_1{}^{max}$, et

    - la deuxième électrode présente au moins une zone de forme circulaire sans catalyseur avec un rayon $R_2 < R_1{}^{max}$,

    dans laquelle $R_2 \geq R_1{}^{max} - 2\, l_m$ et $R_2 > 0$.

2. Pile à combustible selon la revendication 1, dans laquelle le point central de la zone sans catalyseur de la première électrode et le point central de la zone sans catalyseur de la deuxième électrode se trouvent sur un axe, qui est identique au cours de la mesure à l'axe de rayonnement des rayons X.

3. Pile à combustible selon l'une quelconque des revendications 1 à 2, dans le cadre de laquelle la zone sans catalyseur de la première électrode présente un rayon $R_1{}^{max}$ entre 0,1 et 10,0 mm, en particulier entre 0,5 et 2,0 mm.

4. Pile à combustible selon l'une quelconque des revendications 1 à 3, dans le cadre de laquelle l'épaisseur de couche $l_m$ de la membrane est égale ou inférieur à 200 $\mu$m, en particulier est égale ou inférieure à 100 $\mu$m et est de manière avantageuse entre 1 et 50 $\mu$m.

5. Pile à combustible selon l'une quelconque des revendications 1 à 4, dans le cadre de laquelle la zone sans catalyseur de la deuxième électrode présente un rayon maximal $R_2$ de

    $$R_1{}^{max} - 0,5\ l_m.$$

6. Pile à combustible selon l'une quelconque des revendications 1 à 5, comprenant une membrane électrolytique polymère.

7. Pile à combustible selon l'une quelconque des revendications 1 à 6, comprenant une charge de catalyseur de la deuxième électrode supérieure à 0,5 mg/cm$^2$, en particulier comprenant une charge supérieure à 1,0 mg/cm$^2$ et de manière avantageuse comprenant une charge entre 1,5 et 2,5 mg/cm$^2$.

8. Pile à combustible selon l'une quelconque des revendications 1 à 7, dans le cadre de laquelle la deuxième électrode est une cathode.

9. Pile à combustible selon l'une quelconque des revendications 1 à 8, dans le cadre de laquelle le catalyseur de la deuxième électrode comprend de la platine.

10. Procédé servant à effectuer des mesures d'absorption de rayons X par transmission (XAS), **caractérisé en ce**

    - **qu'**une pile à combustible selon l'une quelconque des revendications 1 à 9 est utilisée, et

    - **que** les rayons X utilisés présentent un rayon de rayonnement qui est identique au rayon $R_1{}^{max}$ de la zone, de forme circulaire sans catalyseur, de la première électrode.

**11.** Procédé selon la revendication 10, **caractérisé en ce**

- **qu'**un détecteur est utilisé, lequel détecte exclusivement une zone de forme circulaire avec un rayon, qui est identique au rayon $R_1^{max}$ de la zone, de forme circulaire sans catalyseur, de la première électrode.

**12.** Procédé selon l'une quelconque des revendications 10 à 11, **caractérisé en ce que** les rayons X à travers la zone sans catalyseur de la première électrode sont dirigés de manière incidente sur une zone, en partie sans catalyseur, de la deuxième électrode, et le signal affaibli est détecté immédiatement après par l'intermédiaire d'un détecteur.

**Röntgenstrahl**

Anodenfenster $\qquad$ $R_a^{max}$ $\qquad$ Anode

Zylinder $\qquad$ $l_m$

Kathode

Messfenster $\qquad$ $R_k^{max}$

Detektor

**Figur 1**

Figur 2a

Figur 2b

**Röntgenstrahl**

**Figur 3**

**Figur 4a**

**Figur 4b**

**Figur 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **CHRISTINA ROTH ; NATHALIE MARTZ ; THORSTEN BUHRMESTER ; JOACHIM SCHERER ; HARTMUT FUESS.** *Phys. Chem. Chem. Phys.,* 2002, vol. 4, 3555-3557

- **C. ROTH ; N. BENKER ; M. MAZUREK ; F. SCHEIBA ; H. FUESS.** *Advanced Engineering Materials,* 2005, vol. 7 (10), 952-956
- **A. A. KULIKOVSKY.** *J. Electrochem. Soc.,* 2013, vol. 160 (4), F401-F405